# EUROPÄISCHE PATENTANMELDUNG

(11) **EP 1 892 182 A1**
(43) Veröffentlichungstag der Anmeldung: **27.02.2008**
(21) Anmeldenummer: 06017341.6
(22) Anmeldetag: 21.08.2006
(51) Int. Cl.: B62D 25/06, B62D 29/04, B60J 1/20

(54) **Durchsichtiges und verbundartiges Karosserieanbauteil, Zwischenprodukt und Verfahren zum Herstellen eines solchen Karosserieanbauteils**

(71) Anmelder: ArvinMeritor GmbH, 63128 Dietzenbach (DE)
(72) Erfinder: Ludwig, Matthias, 38159 Vechelde (DE); Niesner, Tobias, 38518 Gifhorn (DE)
(74) Vertreter: Kitzhofer, Thomas

(57) **Zusammenfassung**

Ein Verfahren zum Herstellen eines Karosserieanbauteils (10) weist folgende Schritte auf:
- Umformen einer als Außenhaut dienenden transparenten Folie (12), wobei die Folie eine Außenseite ("Vorderseite") (14) und eine Rückseite (16) hat,
- bereichsweise Aufbringen eines Paneels (18) auf die Rückseite (16) der Folie (12), wobei das Paneel (18) aus transparentem oder transluzentem Material besteht und rückseitig eine Schutzschicht (24) trägt,
- Naßauftrag einer Farbe auf der Rückseite (16) der Folie (12) zur Bildung einer farbgebenden Schicht (22) und
- rückseitiges Hinterschäumen der Folie (12) zumindest in Bereichen, in denen die Folie (12) nicht vom Paneel (18) bedeckt ist, wobei eine geschäumte Schicht (20) gebildet wird.
Dieses Verfahren ersetzt eine außenseitige Lackierung bei teilweise durchsichtige Karosseriebauteilen.
Die Erfindung betrifft ferner ein Karosserieanbauteil und ein Zwischenprodukt bei der Herstellung des Karosserieanbauteils.

## Beschreibung

Die Erfindung betrifft ein Verfahren zum Herstellen eines Karosserieanbauteils und ein solches Karosserieanbauteil. Ferner betrifft die Erfindung ein Zwischenprodukt bei der Herstellung eines Karosserieanbauteils.

Karosserieanbauteile werden an einer Fahrzeugkarosserie angebracht, definieren die Außenhaut des Fahrzeugs im fertig montierten Zustand wenigstens abschnittsweise und sind von außen sichtbar. Karosserieanbauteile können u. a. Klappen (Türen, Deckel), Stoßfänger oder Dachmodule sein. Es gibt Karosserieanbauteile mit einem glasfaserverstärkten PU-Material, wobei die Glasfasern beispielsweise im sogenannten LFI (Long Fibre Injection)-Verfahren in den Kunststoff eingeschossen werden. Eine tiefgezogene, durchgefärbte Folie, die aus Kunststoff oder Aluminium besteht, wird dabei in ein Schäumwerkzeug eingelegt und hinterschäumt. Die durchgefärbte Folie ersetzt eine außenseitige Lackierung und bildet die Außenhaut des Fahrzeugs.

Wichtig bei der Herstellung eines Karosserieanbauteils ist es, daß sich die Farbe des Karosserieanbauteils nicht von der Farbe der angrenzenden, lackierten Karosserie unterscheidet, so daß sich eine durchgehende Farbfläche ergibt. Beim Umformen der aus dem Stand der Technik bekannten, durchgefärbten Folie können jedoch an Ecken und Kanten, insbesondere bei Metallikfarben Schattierungen auftreten, die die gleichmäßige Farbfläche unterbrechen. Nachteilig ist auch, daß von jeder Artenfarbe eine größere Menge an entsprechend durchgefärbter Folie vorgefertigt werden müßte.

Um transparente oder transluzente Bereiche in Karosserieanbauteile zu integrieren und so beispielsweise Panoramadächer zu bilden, ist es aus der EP 1 669 277 bekannt, die transparenten oder transluzenten Bauteile an einem angrenzenden Rahmenbauteil durch Aufkleben zu befestigen. Nachteilig an solchen Karosserieanbauteilen ist, daß in dem Spalt zwischen den Bauteilen Dichtungen erforderlich sind, die Verschleiß ausgesetzt sind und die das optische Erscheinungsbild stören.

Die Aufgabe der Erfindung besteht darin, ein Karosserieanbauteil bereitzustellen, das eine durchgehende Außenfläche ohne Höhenversatz aufweist. Ferner besteht die Aufgabe der Erfindung darin, ein Verfahren zur Herstellung eines Karosserieanbauteils bereitzustellen, mit dem das eine durchgehende Außenfläche ohne Höhenversatz aufweisende Karosserieanbauteil kostengünstig und einfach hergestellt werden kann. Des weiteren besteht die Aufgabe der Erfindung darin, ein Zwischenprodukt bei der Herstellung eines Karosserieanbauteils zu schaffen, das eine durchgehende Außenfläche ohne Höhenversatz aufweist.

Dies wird durch ein erfindungsgemäßes Verfahren zum Herstellen eines Karosserieanbauteils erreicht, das folgende Schritte aufweist:
- Umformen einer als Außenhaut dienenden transparenten Folie, wobei die Folie eine Vorderseite und eine Rückseite hat,
- bereichsweise Aufbringen eines Paneels auf die Rückseite der Folie, wobei das Paneel aus transparentem oder transluzentem Material besteht und rückseitig eine Schutzschicht trägt,
- Naßauftrag einer Farbe auf der Rückseite der Folie zur Bildung einer farbgebenden Schicht und
- rückseitiges Hinterschäumen der Folie zumindest in Bereichen, in denen die Folie nicht vom Paneel bedeckt ist, wobei eine geschäumte Schicht gebildet wird.

Die Außenhaut ist eine transparente, farblose Folie mit einer bevorzugten Dicke im Bereich zwischen 0,5 und 2 mm, die umgeformt wird. Anschließend wird ein vorzugsweise eigensteifes Paneel aus transparentem oder transluzentem Material auf die Rückseite der Folie aufgebracht, wobei das Paneel mit einer Schutzschicht versehen ist. Danach wird eine Farbe auf der Rückseite der Folie naß aufgetragen, d.h. bei der farbgebenden Schicht handelt es sich nicht um eine Folie, die z.B. aufgeklebt wird. Die Farbe wird nach dem Aufbringen getrocknet und bildet eine farbgebende Schicht für die Außenseite des Karosserieanbauteils, das außenseitig nicht mehr lackiert wird. Anschließend wird die Folie rückseitig zumindest in den Bereichen, in denen die Folie nicht vom Paneel bedeckt ist, also vorzugsweise in allen nicht vom Paneel abgedeckten Bereichen, hinterschäumt. In den Bereichen, in denen das Paneel vorgesehen ist, schützt die rückseitig auf dem Paneel vorgesehene Schutzschicht das Paneel vor "Verschmutzungen", die beim Naßauftragen der Farbe z.B. durch den Sprühnebel bzw. beim Aufbringen des PU-Materials entstehen können. Die Schutzschicht kann nach dem Naßauftrag der Farbe bzw. dem Hinterschäumen einfach samt der Verschmutzungen (Farbe, PU-Material) entfernt werden. Die als Außenhaut dienende Folie ist im Gegensatz zum Stand der Technik nicht selbst durchgefärbt, sondern die separate farbgebende Schicht scheint durch die farblose, transparente Folie und gibt dem Karosserieanbauteil in den Bereichen seine Farbe, in denen sie vorgesehen ist. Die Farbe des Karosserieanbauteils entspricht der der restlichen Karosserie. So kann ein Karosserieanbauteil hergestellt werden mit einem transparenten oder transluzenten Bereich und einer stabilen Schäumschicht, das eine durchgehende Außenfläche ohne Spalte zwischen den unterschiedlichen Bereichen hat und bei der die Farbe spaltfrei exakt bis zum Paneel reicht.

Das Paneel kann zusätzlich im Randbereich so ausgeführt sein, daß es Geometrien aufweist, die einen Formschluß zwischen der geschäumten Schicht und dem Paneel ermöglichen, z.B. konisch zur Rückseite verlaufende Seitenränder, Nuten, Hinterschnitte, Stege oder dgl.

Ferner betrifft die Erfindung ein Karosserieanbauteil für ein Fahrzeug, insbesondere ein Dachmodul, mit einer transparenten Folie, die die Außenhaut des Karosserieanbauteils vollständig bildet, einem rückseitig auf einen Teil der Folie befestigten Paneel, das aus transparentem oder transluzentem Material besteht, einer geschäumten Schicht, die rückseitig auf der Folie in nicht durch das Paneel abgedeckten Bereichen vorgesehen ist, und einer farbgebenden Schicht, die zwischen der geschäumten Schicht und der Folie vorgesehen ist. Hinsichtlich der Vorteile wird auf die obigen Erläuterungen verwiesen.

Gemäß einer Ausführungsform ist das Paneel eine eigensteife Folie, wobei das Paneel eine höhere Biegesteifigkeit als die als Außenhaut dienende Folie hat, um die erforderliche Steifigkeit des Karosserieanbauteils zu erreichen.

Gemäß einer weiteren Ausführungsform ist das Paneel aus Glas.

Ferner betrifft die Erfindung ein Zwischenprodukt bei der Herstellung eines Karosserieanbauteils mit einer transparenten Folie, einem rückseitig auf der Folie befestigten, diese teilweise bedeckenden Paneel, das aus transparentem oder transluzentem Material besteht, einer durch Hinterschäumen der Folie in nicht durch das Paneel bedeckten Bereichen hergestellten geschäumten Schicht, einer farbgebenden Schicht, die zwischen der geschäumten Schicht und der Folie vorgesehen ist, und einer entfernbaren Schutzschicht, die rückseitig auf das Paneel aufgebracht ist.

Weitere Merkmale und Vorteile ergeben sich aus der nachfolgenden Beschreibung und den Zeichnungen. Die Erfindung wird anhand einer Ausführungsform beschrieben. In den Zeichnungen zeigen:
- Figur 1 eine perspektivische Ansicht eines Fahrzeugs mit einem erfindungsgemäßen Karosserieanbauteil in Form eines Dachmoduls, und
- Figuren 2 bis 4 den grundsätzlichen Aufbau des erfindungsgemäßen Karosserieanbauteils in unterschiedlichen Verfahrensschritten, wobei Figur 4 das fertiggestellte Karosserieanbauteil und Figur 3 ein erfindungsgemäßes Zwischenprodukt zeigt.

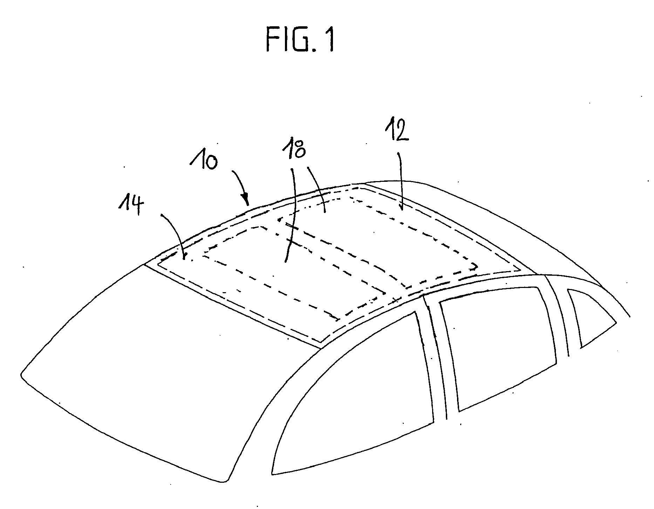

In Figur 1 ist ein Karosserieanbauteil 10 in Form eines Dachmoduls in einem an einem Fahrzeug montierten Zustand gezeigt. Das Karosserieanbauteil 10 könnte auch ein Kotflügel, Tür oder Klappe (Motorhaube, Kofferraumdeckel) eines Fahrzeugs sein.

Der grundsätzliche Aufbau des Karosserieanbauteils ist in Figur 4 gezeigt.

Das Karosserieanbauteil 10 hat eine im montierten Zustand am Fahrzeug von außen sichtbare Außenhaut, die durch eine dünne, transparente, thermisch umgeformte Folie 12 gebildet ist. Die Folie 12 besteht aus transparentem oder transluzentem Kunststoff und hat eine Vorderseite 14, die im eingebauten Zustand von außen sichtbar ist, und eine Rückseite 16. Rückseitig ist die Folie 12 bereichsweise mit wenigstens einem transparenten oder transluzenten Paneel 18 (gezeigt sind zwei) versehen, das eine eigensteife Folie ist oder aus Glas besteht. Das Paneel 18 wird z.B. auf die Folie 12 geklebt.

In den Bereichen, in denen kein Paneel 18 auf die Rückseite 16 der Folie 12 aufgebracht ist, ist die Folie 12 rückseitig hinterschäumt. Eine dabei entstehende geschäumte Schicht 20 besteht aus einem glasfaserverstärkten PU-Schaum. Die Glasfasern F sind durch das LFI (Long Fibre Injection)-Verfahren in den Schaum eingebracht und verstärken dabei die geschäumte Schicht 20, die eine höhere Biegesteifigkeit als die als Außenhaut dienende Folie 12 aufweist und eine Art Tragrahmen bildet.

Zwischen der Folie 12 und der geschäumten Schicht ist eine farbgebende Schicht 22 vorgesehen, die z.B. als Lackschicht ausgebildet ist und die Aufgabe der Außenlackierung übernimmt, da die farbgebende Schicht 22 durch die farblose und transparente Folie 12 scheint und von außen sichtbar ist.

Bei dem Verfahren zum Herstellen des Karosserieanbauteils 10 wird die Folie 12 umgeformt, indem sie tiefgezogen bzw. thermoplastisch umgeformt wird.

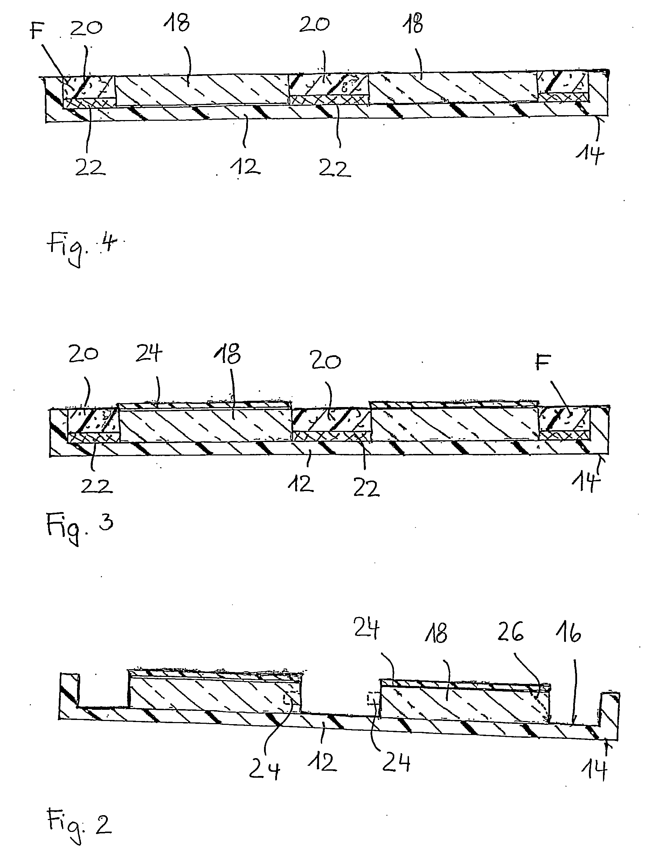

Anschließend wird das Paneel 18 auf die Rückseite 16 der Folie 12 aufgeklebt, wobei das Paneel 18 rückseitig eine Schutzschicht 24 trägt, insbesondere eine abziehbare Folie (Fig. 2).

Auf der Rückseite 16 der Folie 12, vorzugsweise auf das gesamte Teil (d.h. auf die Folie 12 und auf die Schutzschicht 24), wird eine Farbe naß aufgetragen, wobei der Naßauftrag durch Aufrakeln, Walzen oder beim Sprühlackverfahren erfolgen kann. Nach dem Trocknen der naß aufgetragenen Farbe ist die farbgebende Schicht 22 gebildet.

Bei geöffnetem Schäumwerkzeug (nicht gezeigt) wird flüssiges PU-Material rückseitig zumindest in den Bereichen der Folie 12 auf die Folie 12 aufgebracht, die nicht vom Paneel 18 bedeckt sind, wobei Glasfasern F eingeschossen werden (LFI-Verfahren).

Das zweiteilige Schäumwerkzeug wird zusammengefahren, und das PU-Material schäumt aus, füllt den sich zwischen dem Unter- und dem Oberteil (nicht gezeigt) bildenden Hohlraum aus und bildet nach dem Schäumen die geschäumte Schicht 20. Nach dem Auseinanderfahren des Unter- und des Oberteils wird das Zwischenprodukt (Fig. 3) dem nicht gezeigten Schäumwerkzeug entnommen. Das Zwischenprodukt weist rückseitig die Schutzschicht 24 auf, die das Paneel 18 vor Verschmutzungen (Farbe, PU-Material) schützt. Der Randbereich des Paneels 18 weist Geometrien 26 (Hinterschneidungen, Nuten, Abschrägungen, Stege, etc., siehe Fig. 2, unterbrochene Linien) auf, die einen Formschluß zwischen Paneel 18 und Schicht 20 ermöglichen.

Anschließend wird die Schutzschicht 24 von dem Paneel 18 entfernt, so daß die Verschmutzungen, die gegebenenfalls beim Auftragen der Farbe bzw. Aufbringen des PU-Materials entstanden sind, von der Rückseite 16 des Paneels 18 entfernt werden. Im Bereich des Paneels 18 bleibt das Karosserieanbauteil transparent oder transluzent, und im Bereich, in dem die farbgebende Schicht 22 vorgesehen ist, scheint diese durch die Folie 12, wodurch eine Außenlackierung des Karosserieanbauteils 10 entfällt. Die farbgebende Schicht 22, die durch die Folie 12 scheint, unterscheidet sich von der Farbe der restlichen Karosserie nicht.

Mit dem beschriebenen Verfahren kann ein Karosserieanbauteil, insbesondere ein Panoramadach einfach und kostengünstig mit einer durchgehenden Außenfläche hergestellt werden. Es sind also keine Spalte zwischen den aus mehreren Teilen bestehenden Karosserieanbauteilen vorhanden, die aufwendig abgedichtet werden mußten. Das Paneel 18 und die geschäumte Schicht 20 haben eine größere Biegesteifigkeit als die Folie 12, so daß ein stabiles Karosserieanbauteil 10 gebildet wird und die erforderliche Steifigkeit erreicht wird.

## Patentansprüche

1. Verfahren zum Herstellen eines Karosserieanbauteils (10), **gekennzeichnet durch** folgende Schritte:
- Umformen einer als Außenhaut dienenden transparenten Folie (12), wobei die Folie eine Vorderseite (14) und eine Rückseite (16) hat,
- bereichsweise Aufbringen eines Paneels (18) auf die Rückseite (16) der Folie (12), wobei das Paneel (18) aus transparentem oder transluzentem Material besteht und rückseitig eine Schutzschicht (24) trägt,
- Naßauftrag einer Farbe auf der Rückseite (16) der Folie (12) zur Bildung einer farbgebenden Schicht (22) und
- rückseitiges Hinterschäumen der Folie (12) zumindest in Bereichen, in denen die Folie (12) nicht vom Paneel (18) bedeckt ist, wobei eine geschäumte Schicht (20) gebildet wird.

2. Verfahren nach Anspruch 1, **dadurch gekennzeichnet, daß** die geschäumte Schicht (20) nach dem Trocknen der Farbe auf die farbgebende Schicht (22) aufgebracht wird.

3. Verfahren nach Anspruch 1 oder 2, **dadurch gekennzeichnet, daß** die Schutzschicht (24) nach dem Auftragen der Farbe und/oder der geschäumten Schicht (20) von dem Paneel (18) entfernt wird.

4. Verfahren nach einem der vorhergehenden Ansprüche, **dadurch gekennzeichnet, daß** die Schutzschicht (24) eine Folie ist.

5. Verfahren nach einem der vorhergehenden Ansprüche, **dadurch gekennzeichnet, daß** das Paneel (18) auf die Rückseite der Folie (12) aufgeklebt wird.

6. Karosserieanbauteil für ein Fahrzeug, insbesondere Dachmodul, mit
einer transparenten Folie (12), die die Außenhaut des Karosserieanbauteils (10) vollständig bildet,
einem rückseitig auf einen Teil der Folie (12) befestigten Paneel (18), das aus transparentem oder transluzentem Material besteht,
einer geschäumten Schicht (20), die rückseitig auf der Folie (12) in nicht durch das Paneel (18) abgedeckten Bereichen vorgesehen ist, und
einer farbgebenden Schicht (22), die zwischen der geschäumten Schicht (20) und der Folie (12) vorgesehen ist.

7. Karosserieanbauteil nach Anspruch 6, **dadurch gekennzeichnet, daß** das Paneel (18) eine eigensteife Folie ist.

8. Karosserieanbauteil nach Anspruch 6 oder 7, **dadurch gekennzeichnet, daß** das Paneel (18) aus Glas besteht.

9. Zwischenprodukt bei der Herstellung eines Karosserieanbauteils (10) mit
einer transparenten Folie (12),
einem rückseitig auf der Folie (12) befestigten, diese teilweise bedeckenden Paneel (18), das aus transparentem oder transluzentem Material besteht,
einer durch Hinterschäumen der Folie (12) in nicht durch das Paneel (18) bedeckten Bereichen hergestellten geschäumten Schicht (20),
einer farbgebenden Schicht (22), die zwischen der geschäumten Schicht (20) und der Folie (12) vorgesehen ist, und
einer entfernbaren Schutzschicht (24), die rückseitig auf das Paneel (18) aufgebracht ist.
